# EUROPEAN PATENT SPECIFICATION

(11) **EP 0 418 977 B1**
(45) Date of publication and mention of the grant of the patent: **05.05.1993**
(21) Application number: 90202477.7
(22) Date of filing: 18.09.1990
(51) Int. Cl.: A01J 25/16, A01J 27/00, A23C 19/16

(54) **A method for applying a binding to round cheeses, as well as so obtained cheeses**
Verfahren zum Befestigen einer Binde um Käse, sowie solchermassen erhaltene Käse
Procédé pour appliquer un bandage autour de fromages et fromages obtenus par ce procédé

(30) Priority: 20.09.1989 NL 8902355
(43) Date of publication of application: 27.03.1991
(73) Proprietor: KONINKLIJKE NEDERLANDSE ZUIVELBOND FNZ, NL-2288 GD Rijswijk (ZH) (NL)
(72) Inventor: Boersma, Hieronymus Ype,Ir., NL-8917 AV Leeuwarden (NL); Kimenai, Martinus Petrus, NL-7204 CA Zutphen (NL); Köllmann, Clemens Johannes Willebrordus,Ir., NL-5467 JL Veghel (NL); Ijkema, Sietze, NL-9873 RM Gerkesklooster (NL); Spoelstra, Tamme, NL-9291 BA Kollum (NL)
(74) Representative: Barendregt, Frank, Drs.

(56) References cited:
- EP-A- 0 063 845
- FR-A- 1 589 382
- JP-A-58 212 947
- NL-A- 8 800 385
- NL-B- 180 898
- US-A- 3 965 271

## Description

This invention relates to a method for applying a gas and water vapour permeable, permanent cheese binding to round cheeses directly after the brine treatment.

Due to the development of new kinds of cheeses and new types derived from Gouda cheese, a number of problems have arisen which did not exist in the classical cheese preparation process.

One of these problems relates to the deformation of the vertical wall during ripening and storing of cilindrical cheeses, which is also defined as sagging.

This sagging caused by insufficient structural stability of the young cheese may have various backgrounds.

During the preparation of cheese of the Maasdammer kind this phenomenon occurs after the cheese, which after the brine treatment is ripened for 14 days at the ripening temperature of 13-14°C which is usual for e.g. Gouda cheese, is then ripened for 3 weeks at temperatures of 19-21°C, which treatment is usually called the "baking" of the cheese.

This "baking" is primarily intended to initiate the development of the culture of propionic acid bacteriae added to the cheese milk, in order to form the characteristic "eyes" and taste, which are typical for the Maasdammer cheese, but it also has a consequence that the cheese, especially in summer, in view of the specific composition of the milk fat, is inclined to deforming or sagging.

Also in the preparation of cheese types, wherein, contrary to be composition of Gouda cheese, there is a considerably lowered fat or salt content, the necessity exists to support the cheese permanently during and after ripening.

It is known from EP-A-63845, page 2, lines 7 a.f. that with certain types of cheese the necessity exists to wrap the cheeses with a binding, inmediately after leaving the brine bath. The binding may be made from paper or textile showing a resemblance to coarse aseptic gauze, while also synthetic materials are suggested but not futher specified.

A drawback of the use of paper is that it has to be moistened, because it should be applied tightly and without free spaces around the cheese crust; this leads to damage or tearing of the paper.

The use of textile does not show this drawback, but causes problems when cutting the cheese.

NL-B-180898 teaches a process for applying a binding to cheese, which process is restricted to cheese of the Maasdammer type. The binding or support material is teabag paper which removes the above-mentioned drawbacks.

A disadvantage of the use of this teabag paper is that it is a relatively expensive material. Moreover, this material is not so homogeneous in composition that a uniform permeability for water vapour and gases in all radial directions is guaranteed under all circumstances.

According to Dutch patent application NL-A-8900668 which is not a prior publication (filing date March 17, 1989, laid out for public inspection on September 19, 1990; and corresponding to European application 90200579.2, publication number EP-A-0 387 959), the above disadvantages are obviated by using a binding made of a plastic material, i.e. polypropylene, polyester or polyethylene. It is of importance that the binding material does not possess a too high elongation percentage, which is achieved by a calendering treatment. Such bindings have the advantage of a very homogeneous thickness and density, which in turn leads to a very uniform permeability for moisture and gases. The calendering treatment is peferably carried out on one side and the binding is applied with the non-calendered side facing the crust of the cheese, which promotes a good adhesion to the crust of the cheese.
Furthermore, the above-mentioned materials may also be provided with perforations, in order to avoid the occurence of creases or other spaces between the cheese crust and the binding, which additionally has the advantage of a further control of the moisture and gas permeability, whereby mould development is prevented.

A general problem with all the above discussed bindings is the wettability. If during the application the water is not absorbed quickly enough by the material, air bubbles can be formed below or in the binding. In a later stage this may cause mould development.

Furthermore, it is often desirable to use the binding also as a banderole, and accordingly to provide it with a marking printing. With the plastics disclosed in NL-A-8900668, this is not always possible without further problems. A solution for this problem consists in providing the binding material on one side with a printable layer, i. e. the side of the binding which does not face the cheese. Such a printable layer can be formed for instance in the case of polyolefin with the aid of a known heat treatment or treatment with a corona discharge. The printable layer can for example be a mousseline layer which is applied to the exterior side of the binding.

According to this invention the binding consists of regenerated cellulose.

Surprisingly, the above-mentioned drawbacks do not occur when using the binding of this invention. The regenerated cellulose (generally known as "cellophane", a registered trademark) has as a binding the same advantages as the plastic materials from NL-A-8900668, while the use of the present binding does not lead to the above discussed phenomenon of air bubbles; furthermore, cellophane does not need special measures in order to be printed.

Cellophane can be considered a semi-synthetic plastic material. It is obtained by extruding cellulose xanthate to a film, usually in an acid medium. Thereby the xanthate is decomposed and cellulose is regenerated. However, this cellulose is not identical to the starting cellulose, from which the xanthate has been made; in particular cellophane does not have a fibrous structure.

The present finding is especially surprising because the analogous fibrous product, the viscose rayon, is know to be weak and accordingly would be inferior for the present purpose. Moreover, cellophane is already known since 1911 and has been used a.o. as a sausage casing.

US-A-3,965,271 discloses the production of stuffed cheese, wherein a cheese curd is extruded through a nozzle into a tubular mold and then-after solidification - removed from the mold leaving a solidified cheese product. The problems solved by the present invention - which reside in the necessity of the use of a supporting binding after brine treatment for the prevention of sagging of cheese - are not involved in the process of US-A-3,965,271 which relates to a cheese which is totally different from the cheese to which a binding is applied. Furthermore, the mold according to US-A-3,965,271 comprises an outer film laminate having a first ply of cellophane with a gas-permeable film on its outer surface, and a second ply of biaxially oriented polypropylene bonded to the inner surface of the cellophane; and an inner film comprising a ply of biaxially oriented polypropylene, and this composite is of course much more complicated than the present simple cellophane binding. In addition, a layer having a low gas-permeability would not be suitable for the present purpose, since gas-impermeability would lead to mould growth.

For applying a supporting binding normally an adhesive agent is used, e.g. an aqueous starch solution. This also is true for the present binding material sothat the application of the cellophane binding can simply be carried out by moistening the cellophane with such a solution and laying it around the cheese in moist condition. The thus moistened cellophane quickly absorbs part of the applied moisture, whereby it expands. On drying the regenerated cellulose shrinks sothat the binding will ly closely against the cheese. The cellophane can be applied very well to the cheese surface. Air bubbles do not form between cheese and binding. As has appeared experimentally, the material possesses an ideal permeability for the ripening of the cheese. Moreover, as is well-known, cellophane can be printed without further measures sothat, if desired, the supporting binding can also be provided with a marking printing and in this way can serve at the same time as a banderole.

It is general practice to apply inmediately a plastic emulsion to the supporting binding applied after the brine treatment. It has appeared that the so applied plastic shows such an excellent adhesion to the cellophane that the ripened cheese shows no difference seen between surfaces which have been and which have not been provided with cellophane.

The adhesion of the cellophane to the cheese crust is also excellent and it has appeared that when cutting the cheese, the cellophane is also cut without any difficulty and without any risk of drawing it loose from the cheese surface.

The width of the supporting binding is adapted to the height of he cilindrical part of the cheese to be treated, but generally is 4-8 cm.

## Claims

1. A method for applying a gas and water vapour permeable, permanent cheese binding to round cheeses directly after the brine treatment, **characterized** in that the binding consists of regenerated cellulose.

2. Cheese produced with the use of the method according to claim 1.

## Patentansprüche

1. Verfahren zum Anbringen einer gegenüber Gas und Wasserdampf durchlässigen dauerhaften Käsebinde um einen Käse direkt nach der Salzlakenbehandlung, dadurch **gekennzeichnet,** daß die Binde aus regenerierter Cellulose besteht.

2. Käse, der nach dem Verfahren nach Anspruch 1 hergestellt wurde.

## Revendications

1. Procédé pour appliquer un bandage permanent de fromage, perméable aux gaz et à la vapeur d'eau, à des fromages ronds immédiatement après le traitement à la saumure, caractérisé en ce que le bandage consiste en cellulose régénérée.

2. Fromage produit en utilisant le procédé de la revendication 1.
